# EUROPEAN PATENT SPECIFICATION

(11) **EP 4 304 138 B1**
(45) Date of publication and mention of the grant of the patent: **04.03.2026**
(21) Application number: 23179986.7
(22) Date of filing: 19.06.2023
(51) Int. Cl.: H04L 25/02, B60W 30/188

(54) **POWER TAKE-OFF CONTROLLER**
ZAPFWELLENSTEUERUNG
DISPOSITIF DE COMMANDE DE PRISE DE FORCE

(30) Priority: 07.07.2022 NL 2032408
(43) Date of publication of application: 10.01.2024
(73) Proprietor: Zuidberg Techniek Holding B.V., 8307 DE Ens (NL)
(72) Inventor: De Zwaan, Gerrit, 8307 DE Ens (NL)
(74) Representative: Nederlandsch Octrooibureau

(56) References cited:
- US-A- 6 007 227
- US-A1- 2005 211 528
- US-A1- 2022 135 038
- IRMAK ALADAGLI ET AL: "Modeling and control of a Continuously Variable Transmission in a constant speed power take-off application", CONTROL, AUTOMATION AND SYSTEMS (ICCAS), 2012 12TH INTERNATIONAL CONFERENCE ON, IEEE, 17 October 2012 (2012-10-17), pages 229 - 234, XP032291789, ISBN: 978-1-4673-2247-8

## Description

### Field of the invention

The present invention relates to a power take-off, PTO, controller, in particular a PTO controller for a PTO transmission for a vehicle.

### Background art

Power take-off, PTO, transmissions for vehicles have long been used for various vehicles in agriculture and industry to drive and operate implements coupled to the PTO transmission. For example, well-known applications involve a tractor provided with a PTO transmission attached to the front of the tractor, sometimes referred to as a Front PTO. An input shaft of the PTO transmission is connected to the tractor's engine and an output shaft of the PTO transmission is coupled to an implement, such as a mowing attachment, a wood chipper, a snow blower, a harvester, a spreader or a rotavator for preparing a seed bed. To control the PTO transmission, electronic signals from the tractor are utilized for engaging and disengaging a clutch of the PTO transmission, thereby connecting and disconnecting the input shaft from the output shaft of the PTO transmission.

Patent application US 2005/0211528 A1 relates to a power take-off, PTO, control system and method for engaging a PTO clutch of a vehicle. The PTO control system is able to utilize both an engine speed and PTO output speed values for determining a predicted and/or actual PTO load and other variable conditions which can effect engagement of the PTO clutch. The PTO control system comprises a controller, such as a microcontroller, receiving the engine speed as an input and wherein an output of the controller is connected to a hydraulic valve of the PTO control system for engagement of the PTO clutch. In an embodiment the controller may apply an analogue or pulse-width modulated, PWM, signal to the valve.

US 6 007 227 A teaches a controller for a blender system mounted on a truck, the controller comprising one or more microprocessors whose sensor inputs are optically isolated and which generate a PWM output signal controlling a hydrostatic drive powered by the PTO from the truck engine.

The conference paper by Irmak Aladagli et al: "Modeling and control of a Continuously Variable Transmission in a constant speed power take-off application", CONTROL, AUTOMATION AND SYSTEMS (ICCAS), 2012 12TH INTERNATIONAL CONFERENCE ON, IEEE, 17 October 2012, pages 229-234, XP032291789, ISBN: 978-1-4673-2247-8 pertains to load emulation by electric motors in PTO applications.

US 2022/135038 A1 describes a wireless user interface for providing system inputs to a microprocessor in a PTO controller. The PTO controller is further connected to a load sensor.

PTO control systems such as those described above are often specifically designed to work with a particular type of vehicle utilizing specific or non-standardised signals designed by the original vehicle manufacturer for input to the controller. As a result, the PTO control system may not be able to properly control a PTO transmission when communicating with other types of vehicles.

### Summary of the inventions

The present invention seeks to provide a power take-off, PTO, controller for a PTO transmission for a vehicle, in particular a PTO controller configured to process signals from a variety of different vehicles in compatible manner therewith. The PTO controller minimizes communication errors and faults when processing signals specified by an Original Equipment Manufacturer, OEM, of the vehicle for operating a PTO transmission. Therefore, the PTO controller allows for reliable communication with various vehicles and as such increase the number of applications in which a PTO transmission can be used. Moreover, the PTO controller allows for additional functions for control, monitoring and safety of a PTO transmission.

According to the present invention, a power take-off, PTO, controller for a PTO transmission for a vehicle is provided, wherein the PTO controller comprises a control input port configured for communicative connection to the vehicle and receiving input signals, i.e. communication signals, therefrom, and a control output port configured for communicative connection to the PTO transmission and providing output signals thereto. The PTO controller further comprises
a controller arrangement communicatively connected to the control input port and the control output port, wherein the controller arrangement is configured to control the output signals for operating the PTO transmission based on the input signals, and
a galvanic isolator arrangement connected between the control input port and the controller arrangement for galvanic isolation of the input signals from the controller arrangement when the PTO controller is in use. The PTO controller further comprises a load emulator connected to the control input port and the galvanic isolator arrangement.

The galvanic isolator arrangement provides for galvanic decoupling of the controller arrangement from the vehicle and as such allows for processing of the input signals with minimal disturbances thereof. This, in turn, minimizes potential communication errors and faults being generated and registered by the vehicle so that the PTO controller is compatible with a larger number of different vehicles and OEM specified communication signals rather than just one specific vehicle and OEM communication signal specification thereof.

### Short description of drawings

The present invention will be discussed in more detail below, with reference to the attached drawings, in which
Figure 1 shows a schematic view of a power take-off controller according to an embodiment of the present invention;
Figure 2 shows a schematic view of a galvanic isolator as used in the power take-off controller according to an embodiment of the present invention.

### Detailed description of embodiments

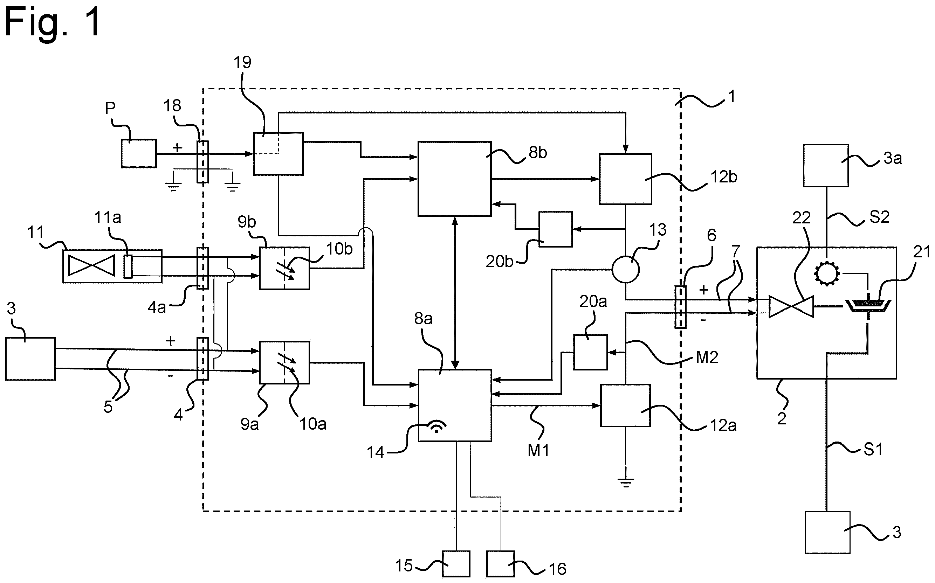

Figure 1 shows a schematic view of a power take-off, PTO, controller 1 of the present invention. The PTO controller 1 is responsible for correct engagement and disengagement of a PTO transmission 2 that is configured to be driven by a vehicle 3 via an input shaft S1 and to drive an implement 3a via an output shaft S2. In the exemplary embodiment shown, engagement and disengagement of the PTO transmission 2 is achieved by a controllable valve 22, e.g. a controllable hydraulic valve 22, for operating a clutch 21 that couples and decouples the input shaft S1 and output shaft S2 from each other. The valve 22 is then to be controlled by PTO controller 1.

The PTO controller 1 of the present invention is arranged to interface with the vehicle 3 and the PTO transmission 2 for engagement and disengagement thereof. As depicted, the PTO controller 1 comprises a control input port 4 and a control output port 6. The control input port 4 is configured for communicative connection to the vehicle 3 for receiving input signals 5 therefrom, and the control output port 6 is configured for communicative connection to the PTO transmission 2 for providing output signals 7 thereto. In an exemplary embodiment, the output signals 7 are provided to the controllable valve 22 of the PTO transmission 2 such that the clutch 21 is operated for coupling and decoupling the input shaft S1 and output shaft S2.

The input signals 5 provided by the vehicle 3 do not carry substantial power and as such must be considered as signals for communication and control purposes only.

In an embodiment, the input signals 5 from the vehicle 3 may comprise OEM prescribed communication signals in the form of pulse width modulated, PWM, signals that are mass (-) or voltage (+) controlled.

The PTO controller 1 further comprises a controller arrangement 8a, 8b which is communicatively connected to the control input port 4 and the control output port 6. That is, the controller arrangement 8a, 8b is connected to and between the control input port 4 and the control output port 6. The controller arrangement 8a, 8b is configured to control the output signals 7 for operating the PTO transmission 2 based on the input signals 5 received from the vehicle 3. The PTO controller 1 further comprises a galvanic isolator arrangement 9a, 9b connected between the control input port 4 and the controller arrangement 8a, 8b for galvanic isolation of the input signals 5 from the controller arrangement 8a, 8b when the PTO controller 1 is in use.

The galvanic isolator arrangement 8a, 8b allows for galvanic decoupling of the controller arrangement 8a, 8b from the vehicle 3 and as such allows for processing of the input signals 5 whilst minimizing potential communication errors being generated and registered by the vehicle 3. So by virtue of the galvanic isolator arrangement 8a, 8b the PTO controller 1 is able to reliably interface with many different vehicles and process many OEM prescribed communication signals.

In an exemplary embodiment, the galvanic isolator arrangement 9a, 9b comprises an optocoupler arrangement 10a, 10b, providing galvanic isolation and as such minimize potential communication errors or faults generated by the vehicle 3 when the PTO controller 1 processes input signals 5 as specified by the OEM of the vehicle 3.

To further facilitate reliable and compatible communication between the vehicle 3 and the PTO controller 1, an embodiment is provided wherein the PTO controller 1 comprises a load emulator 11 connected to the control input port 4 and the galvanic isolator arrangement 9a, 9b. In this embodiment, when the PTO controller 1 is in use, the load emulator 11 allows the vehicle 3 to register a load representing an expected, prescribed type of PTO transmission when the PTO controller 1 receives input signals 5 at the control input port 4. For example, the vehicle 3 may be configured to measure an output current of the input signals 5. In case this output current deviates too much from an OEM prescribed value, then the vehicle 3 may abort communication with the PTO transmission 2 connected to the vehicle 3 and generate one or more communication errors. Therefore, the load emulator 11 allows for reliable communication through signal emulation between the vehicle 3 and the PTO controller 1 as the vehicle 3 measures an expected load/signal as prescribed by the OEM.

It is important to note that the load emulator 11 does not emulate a physical/mechanical load of e.g. the implement 3a on the PTO transmission 2 as such. Instead, the load emulator 11 allows emulation of electronic communication signals, such as control signals, between the vehicle 3 and the PTO controller 1. The load emulator 11 thus allows the vehicle 3 to communicate with the PTO controller 1 in a manner compatible with OEM signals provided by the vehicle 3. Hence, the load emulator 11 must be seen as a signal emulator allowing input signals 5 specific to the vehicle 3 to be utilized without causing communication errors and faults when the PTO controller 1 processes signals specified by the OEM of the vehicle 3 for operating the PTO transmission 2 via the PTO controller 1.

In an exemplary embodiment, the load emulator 11 may comprise a resistive element 11a. This resistive element 11a is connected to the control input port 4 for receiving input signals 5 therefrom when the PTO controller 1 is in use. The resistive element 11a provides for a load on the control input port 4 whereby the vehicle 3 is able to perceive the presence of a PTO transmission 2 exhibiting expected load characteristics, i.e. signal characteristics, thereby preventing communication errors being generated by the vehicle 3. The load provided by the resistive element 11a exhibits no substantial power and as such represents a mere communication signal over the control input port 4 such that the vehicle 3 perceives presence of an OEM compatible PTO transmission 2.

Since each vehicle 3 may provide OEM prescribed communication signals, such as the input signals 5, it may be advantageous to change or switch the load emulator 11 in case the PTO transmission 2 is to be used with another vehicle 3 utilizing different OEM prescribed communication signals. To that end an embodiment is provided wherein the PTO controller 1 comprises an auxiliary port 4a connected to the control input port 4 and the galvanic isolator arrangement 9a, 9b, and wherein the load emulator 11 is removably connectable to the auxiliary port 4a external to the PTO controller 1. This embodiment provides external access to the load emulator 11 to facilitate interchanging the load emulator 11 with specific or custom load or signal characteristics for use with a particular vehicle 3 and prescribed OEM communication requirements thereof.

Figure 1 further shows that in an embodiment the controller arrangement 8a, 8b comprises a parallel arrangement of a first microcontroller 8a and a second microcontroller 8b, wherein the galvanic isolator arrangement 9a, 9b comprises a parallel arrangement of a first galvanic isolator 9a and a second galvanic isolator 9b. The first galvanic isolator 9a is connected between the control input port 4 and the first microcontroller 8a, and wherein the second galvanic isolator 9b is connected between the control input port 4 and the second microcontroller 8b. Using a parallel arrangement for both the controller arrangement 8a, 8b and the galvanic isolator arrangement 9a, 9b allows for increased safety of operation as well as increased functionality of operation of the PTO controller 1. For example, output signals 7 for engaging the PTO transmission 2 may only be provided when both the first microcontroller 8a and the second microcontroller 8b are operational and configured as required. Should one of the first microcontroller 8a or the second microcontroller 8b be non-functional or not be configured in a particular way, then the output signals 7 for engaging the PTO transmission 2 may not be provided by the parallel arrangement of the first microcontroller 8a and the second microcontroller 8b. Therefore, the parallel arrangement of the first microcontroller 8a and the second microcontroller 8b provides for redundancy and enhanced safety whereby outputs signal 7 are generated only when both the first microcontroller 8a and the second microcontroller 8b operate as required. Furthermore, the first microcontroller 8a and the second microcontroller 8b may each be individually configurable as required for providing particular output signals 7 for engagement and disengagement of the PTO transmission 2.

To optimize operation of the parallel arrangement of the first microcontroller 8a and the second microcontroller 8b, an embodiment is provided wherein the first microcontroller 8a and the second microcontroller 8b are communicatively connected, so that operational behaviour of the first microcontroller 8a may depend on operational behaviour of the second microcontroller 8b, or vice versa. By communicatively connecting the parallel arrangement the first microcontroller 8a and the second microcontroller 8b operational safety and functionality are improved.

In an embodiment mentioned earlier, the galvanic isolator arrangement 9a, 9b may comprise an optocoupler arrangement 10a, 10b, providing galvanic isolation and as such minimize potential communication errors between the vehicle 3 and the PTO controller 1. In a further embodiment, the first galvanic isolator 9a comprises a first optocoupler 10a and wherein the second galvanic isolator 9b comprises a second optocoupler 10b, thereby galvanically decoupling both the first microcontroller 8a and the second microcontroller 8b from the control input port 4.

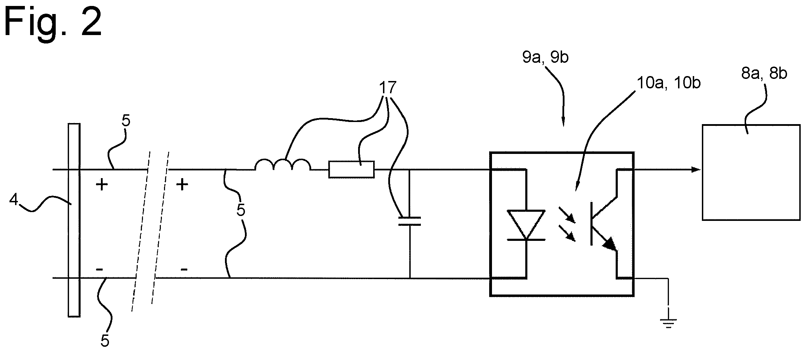

Referring to Figure 2, a schematic exemplary embodiment is depicted of the first and second galvanic isolator 9a, 9b. In the embodiment shown, the first galvanic isolator 9a comprises the first optocoupler 10a connected to the first microcontroller 8a, and wherein input signals 5 are provided on the input control port 4 when the PTO controller 1 is in use. Likewise, in an embodiment the second galvanic isolator 9b comprises the second optocoupler 10b connected to the second microcontroller 8b. From Figure 2 it can be inferred that both the first galvanic isolator 9a and the second galvanic isolator 9b may further comprise a filter 17 connected between the control input port 4 and the first optocoupler 10a and the second optocoupler 10b respectively. The filter 17 may be configured to filter e.g. unwanted frequencies, noise etc. to improve accurate and reliable operation of the PTO controller 1. In a specific embodiment, the filter 17 may be an RLC filter, e.g. a low pass filter.

Returning to Figure 1, in an embodiment the PTO controller 1 may comprising a low side switch 12a connected to the control output port 6 and the first microcontroller 8a, and a high side switch 12b connected to the control output port 6 and the second microcontroller 8b. In this embodiment the low side switch 12a is controllable by the first microcontroller 8a and the high side switch 12b is controllable by the second microcontroller 8b. The high side switch 12b is responsible for controlling power P supplied by the vehicle 3, e.g. a voltage provided by the vehicle 3, e.g. from a 9 to 30 volt supply side (+) thereof, and wherein the low side switch 12a is arranged to control the mass side (-). From a safety perspective, the high side switch 12b and the low side switch 12a must both be functional to provide the output signals 7 to the PTO transmission 2.

In a specific embodiment, the PTO controller 1 may comprise a low side digital circuit 20a to provide a functional status of the low side switch 12a to the first microcontroller 8a, and a high side digital circuit 20b to provide a functional status of the high side switch 12b to the second microcontroller 8a. The functional status feedback from the low side digital circuit 20a and the high side digital circuit 20b can be used to provide further safety and additional control functionality to the PTO controller 1. For example, the low side digital circuit 20a and the high side digital circuit 20b could both provide status feedback as to whether the low side switch 12a and the high side switch 12b, respectively, are operational.

In an embodiment, the first microcontroller 8a is configured to provide a first modulation signal M1 to the low side switch 12a and wherein the low side switch 12a is configured to provide a second modulation signal M2 to the control output port 6. In this embodiment the low side switch 12a provides the second modulated signal M2 to the control output port 6 contributing to the output signals 7 for controlling the PTO transmission 2. The first and second modulation signal M1, M2 may each be PWM signals.

For further monitoring and control purposes, in an embodiment the PTO controller 1 comprises a current sensor 13 connected between the high side switch 12b and the control output port 6, and wherein the current sensor 13 is further communicatively connected to the first microcontroller 8a. The current sensor 13 allows an operating current of the input signals 7 to be monitored and fed back to the first microcontroller 8a. Monitoring the operating current may be needed in case electrical characteristics, e.g. electrical resistance, of the PTO transmission 2 changes when in use. For example, when the output signals 7 control the valve 22 that operates the clutch 21, then the electrical resistance of the valve 22 may change over time as the valve 22 heats up during prolonged use. The current sensor 13 allows such changes in operating current to be monitored and the first microcontroller 8a is able to change the first modulation signal M1 in response to these changes in operating current.

According to the invention, the PTO controller 1 can be used with various types of PTO transmissions 2 and as such provide for a much wider area of vehicle applications using the same PTO transmission 2.

In particular, an embodiment may be provided wherein the first microcontroller 8a is configured to receive programmable configuration parameters for the PTO transmission 2, and wherein the first modulation signal M1 to be provided by the first microcontroller 8a is adapted based on the programmable configuration parameters. This embodiment allows the first microcontroller 8a to be configured according to control requirements of a specific PTO transmission 2.

Configurability of the first microcontroller 8a can be facilitated by considering an embodiment wherein the first microcontroller 8a comprises a wireless module 14 for external wireless communication, such as Bluetooth or WiFi. The wireless module 14 allows wireless transfer of programmable configuration parameters to the first microcontroller 8a, so that a convenient and efficient mobile solution is provided for configuring the PTO controller 1 by means of a mobile device.

It is worth noting that the first microcontroller 8a may provide more functionality than the second microcontroller 8b. For example, in an embodiment the first microcontroller 8a may be connectable to one or more sensors 15 and/or light indicators 16. The one or more sensors 15 and/or light indicators 16 may be used to provide additional monitoring and control functionality to the PTO controller 1. In particular, in an embodiment the one or more sensors 15 and light sensors 16 may be arranged on the vehicle 3 external to the PTO controller 1. In another embodiment the one or more sensors 15 may be arranged on the vehicle 3 whereas the one or more light indicators 16 may be arranged on the PTO controller 1.

As mentioned above, the high side switch 12b is responsible for controlling power from the vehicle 3, e.g. from a 9 to 30 volt supply side (+) of the vehicle 3. In particular, in an embodiment the PTO controller 1 may comprise an ignition port 18 which is connectable to the main electrical power circuit of the vehicle 3. For example, when the vehicle 3 is turned on, the ignition port 18 may be connected to a 9 to 30 volt power supply P of the vehicle 3 that directly feeds power to the high side switch 12b without intervening electronics. In another embodiment an auxiliary circuit arrangement 19 may be provided between the ignition port 18 and the high side switch 12b. The auxiliary circuit arrangement 19 may comprise further electronics such as a reverse polarity protection circuit. In yet another embodiment the auxiliary circuit arrangement 19 is connected to the first microcontroller 8a and the second microcontroller 8b for providing power thereto.

According to the invention, the PTO controller 1 provides a versatile and universal solution for allowing a vehicle 3 of choice to operate a PTO transmission 2 of choice. That is, the PTO controller 1 does not require that the PTO transmission 2 and vehicle 3 form a fixed combination. To achieve such versatility, the PTO controller 1 may be provided as a separate, external component to be connected to a particular vehicle 3 and PTO transmission 2 via a set of cables (not shown). A load or signal emulator 11 may also be provided separately to improve compatible communication between the PTO transmission 2 and the vehicle 3. In view of this, the present invention may also relate to a kit or combination comprising the PTO controller 1 and the PTO transmission 2. In an embodiment, the kit or combination may comprise the load or signal emulator 11 for specially matching OEM communication requirements between the vehicle 3 and the PTO transmission 2.

The present invention embodiments have been described above with reference to a number of exemplary embodiments as shown in and described with reference to the drawings. Modifications and alternative implementations of some parts or elements are possible, and are included in the scope of protection as defined in the appended claims.

## Claims

1. A Power Take-Off, PTO, controller (1) for a PTO transmission (2) for a vehicle (3), comprising a control input port (4) configured for communicative connection to the vehicle (3) and receiving input signals (5) therefrom, a control output port (6) configured for communicative connection to the PTO transmission (2) and providing output signals (7) thereto;
a controller arrangement (8a, 8b) communicatively connected to the control input port (4) and the control output port (6), wherein the controller arrangement (8a, 8b) is configured to control the output signals (7) for operating the PTO transmission (2) based on the input signals (5); and a galvanic isolator arrangement (9a, 9b) connected between the control input port (4) and the controller arrangement (8a, 8b) for galvanic isolation of the input signals (5) from the controller arrangement (8a, 8b) when the PTO controller (1) is in use, wherein the PTO controller is **characterized by**
further comprising a load emulator (11) connected to the control input port (4) and the galvanic isolator arrangement (9a, 9b).

2. The PTO controller according to claim 1, wherein the galvanic isolator arrangement (9a, 9b) comprises an optocoupler arrangement (10a, 10b).

3. The PTO controller according to claim 1 or 2, wherein the load emulator (11) comprises a resistive element (11a).

4. The PTO controller according to any of claims 1-3, comprising an auxiliary port (4a) connected to the control input port (4) and the galvanic isolator arrangement (9a, 9b), and wherein the load emulator (11) is removably connectable to the auxiliary port (4a) external to the PTO controller (1).

5. The PTO controller according to any one of claims 1-4, wherein the controller arrangement (8a, 8b) comprises a parallel arrangement of a first microcontroller (8a) and a second microcontroller (8b), and wherein the galvanic isolator arrangement (9a, 9b) comprises a parallel arrangement of a first galvanic isolator (9a) and a second galvanic isolator (9b),
wherein the first galvanic isolator (9a) is connected between the control input port (4) and the first microcontroller (8a), and wherein the second galvanic isolator (9b) is connected between the control input port (4) and the second microcontroller (8b).

6. The PTO controller according to claim 5, wherein the first microcontroller (8a) and second microcontroller (8b) are communicatively connected.

7. The PTO controller according to claim 5 or 6, wherein the first galvanic isolator (9a) comprises a first optocoupler (10a) and wherein the second galvanic isolator (9b) comprises a second optocoupler (10b).

8. The PTO controller according to claim 7, wherein each of the first galvanic isolator (9a) and the second galvanic isolator (9b) comprises a filter (17) connected between the control input port (4) and the first optocoupler (10a) and second optocoupler (10b) respectively.

9. The PTO controller according to any one of claims 5-8, further comprising a low side switch (12a) connected to the control output port (6) and the first microcontroller (8a), and a high side switch (12b) connected to the control output port (6) and the second microcontroller (8b).

10. The PTO controller according to claim 9, further comprising a current sensor (13) connected between the high side switch (12b) and the control output port (6), and further communicatively connected to the first microcontroller (8a).

11. The PTO controller according to claim 9 or 10, wherein the first microcontroller (8a) is configured to provide a first modulation signal (M1) to the low side switch (12a) and wherein the low side switch (12a) is configured to provide a second modulation signal (M2) to the control output port (6).

12. The PTO controller according to claim 11, wherein the first microcontroller (8a) is configured to receive programmable configuration parameters for the PTO transmission (2), wherein the first modulation signal (M1) to be provided by the first microcontroller (8a) is adapted based on the programmable configuration parameters.

13. The PTO controller according to any one of claims 5-12, wherein the first microcontroller (8a) comprises a wireless module (14) for external wireless communication.

14. The PTO controller according to any one of claims 5-13, wherein the first microcontroller (8a) is connectable to one or more sensors (15) and/or light indicators (16).

## Patentansprüche

1. Zapfwellensteuerung (1), PTO-Steuerung, für ein PTO-Getriebe (2) für ein Fahrzeug (3), umfassend einen Steuereingangsanschluss (4), der für die kommunikative Verbindung mit dem Fahrzeug (3) konfiguriert ist und von diesem Eingangssignale (5) empfängt, einen Steuerausgangsanschluss (6), der für die kommunikative Verbindung mit dem PTO-Getriebe (2) konfiguriert ist und diesem Ausgangssignale (7) bereitstellt;
eine Steuerungsanordnung (8a, 8b), die mit dem Steuereingangsanschluss (4) und dem Steuerausgangsanschluss (6) kommunikativ verbunden ist, wobei die Steuerungsanordnung (8a, 8b) dazu konfiguriert ist, die Ausgangssignale (7) zum Betreiben des PTO-Getriebes (2) auf der Grundlage der Eingangssignale (5) zu steuern; und eine galvanische Trennanordnung (9a, 9b), die zwischen dem Steuereingangsanschluss (4) und der Steuerungsanordnung (8a, 8b) zur galvanischen Trennung der Eingangssignale (5) von der Steuerungsanordnung (8a, 8b) verbunden ist, wenn die PTO-Steuerung (1) in Betrieb ist, wobei die PTO-Steuerung **dadurch gekennzeichnet ist,**
**dass** sie ferner einen Lastemulator (11) umfasst, der mit dem Steuereingangsanschluss (4) und der galvanischen Trennanordnung (9a, 9b) verbunden ist.

2. PTO-Steuerung nach Anspruch 1, wobei die galvanische Trennanordnung (9a, 9b) eine Optokoppleranordnung (10a, 10b) umfasst.

3. PTO-Steuerung nach Anspruch 1 oder 2, wobei der Lastemulator (11) ein Widerstandselement (11a) umfasst.

4. PTO-Steuerung nach einem der Ansprüche 1-3, umfassend einen Hilfsanschluss (4a), der mit dem Steuereingangsanschluss (4) und der galvanischen Trennanordnung (9a, 9b) verbunden ist, und wobei der Lastemulator (11) abnehmbar mit dem Hilfsanschluss (4a) außerhalb der PTO-Steuerung (1) verbindbar ist.

5. PTO-Steuerung nach einem der Ansprüche 1-4, wobei die Steuerungsanordnung (8a, 8b) eine parallele Anordnung eines ersten Mikrocontrollers (8a) und eines zweiten Mikrocontrollers (8b) umfasst, und wobei die galvanische Trennanordnung (9a, 9b) eine parallele Anordnung eines ersten galvanischen Trenners (9a) und eines zweiten galvanischen Trenners (9b) umfasst,
wobei der erste galvanische Trenner (9a) zwischen dem Steuereingangsanschluss (4) und dem ersten Mikrocontroller (8a) angeschlossen ist, und wobei der zweite galvanische Trenner (9b) zwischen dem Steuereingangsanschluss (4) und dem zweiten Mikrocontroller (8b) angeschlossen ist.

6. PTO-Steuerung nach Anspruch 5, wobei der erste Mikrocontroller (8a) und der zweite Mikrocontroller (8b) kommunikativ verbunden sind.

7. PTO-Steuerung nach Anspruch 5 oder 6, wobei der erste galvanische Trenner (9a) einen ersten Optokoppler (10a) umfasst und wobei der zweite galvanische Trenner (9b) einen zweiten Optokoppler (10b) umfasst.

8. PTO-Steuerung nach Anspruch 7, wobei sowohl der erste galvanische Trenner (9a) als auch der zweite galvanische Trenner (9b) einen Filter (17) umfassen, der zwischen dem Steuereingangsanschluss (4) und dem ersten Optokoppler (10a) bzw. dem zweiten Optokoppler (10b) angeschlossen ist.

9. PTO-Steuerung nach einem der Ansprüche 5-8, die ferner einen Low-Side-Schalter (12a), der mit dem Steuerausgangsanschluss (6) und dem ersten Mikrocontroller (8a) verbunden ist, und einen High-Side-Schalter (12b), der mit dem Steuerausgangsanschluss (6) und dem zweiten Mikrocontroller (8b) verbunden ist, umfasst.

10. PTO-Steuerung nach Anspruch 9, die ferner einen Stromsensor (13) umfasst, der zwischen dem High-Side-Schalter (12b) und dem Steuerausgangsanschluss (6) angeschlossen ist, und ferner kommunikativ mit dem ersten Mikrocontroller (8a) verbunden ist.

11. PTO-Steuerung nach Anspruch 9 oder 10, wobei der erste Mikrocontroller (8a) dazu konfiguriert ist, ein erstes Modulationssignal (M1) an den Low-Side-Schalter (12a) bereitzustellen, und wobei der Low-Side-Schalter (12a) dazu konfiguriert ist, ein zweites Modulationssignal (M2) an den Steuerausgangsanschluss (6) bereitzustellen.

12. PTO-Steuerung nach Anspruch 11, wobei der erste Mikrocontroller (8a) dazu konfiguriert ist, programmierbare Konfigurationsparameter für das PTO-Getriebe (2) zu empfangen, wobei das vom ersten Mikrocontroller (8a) bereitzustellende erste Modulationssignal (M1) auf der Grundlage der programmierbaren Konfigurationsparameter angepasst wird.

13. PTO-Steuerung nach einem der Ansprüche 5-12, wobei der erste Mikrocontroller (8a) ein Funkmodul (14) für die externe Funkkommunikation umfasst.

14. PTO-Steuerung nach einem der Ansprüche 5-13, wobei der erste Mikrocontroller (8a) mit einem oder mehreren Sensoren (15) und/oder Leuchtanzeigen (16) verbindbar ist.

## Revendications

1. Contrôleur de prise de force, PTO, (1) pour une transmission de PTO (2) pour un véhicule (3), comprenant un port d'entrée de commande (4) configuré pour une connexion communicative au véhicule (3) et pour recevoir des signaux d'entrée (5) de celui-ci, un port de sortie de commande (6) configuré pour une connexion communicative à la transmission de PTO (2) et pour fournir des signaux de sortie (7) à celle-ci ;
un agencement de contrôleur (8a, 8b) connecté de manière communicative au port d'entrée de commande (4) et au port de sortie de commande (6), où l'agencement de contrôleur (8a, 8b) est configuré pour commander les signaux de sortie (7) pour faire fonctionner la transmission de PTO (2) sur la base des signaux d'entrée (5); et un agencement d'isolateur galvanique (9a, 9b) connecté entre le port d'entrée de commande (4) et l'agencement de contrôleur (8a, 8b) pour une isolation galvanique des signaux d'entrée (5) par rapport à l'agencement de contrôleur (8a, 8b) lorsque le contrôleur de PTO (1) est en cours d'utilisation, où le contrôleur de PTO est **caractérisé en ce qu'**il
comprend en outre un émulateur de charge (11) connecté au port d'entrée de commande (4) et à l'agencement d'isolateur galvanique (9a, 9b).

2. Contrôleur de PTO selon la revendication 1, où l'agencement d'isolateur galvanique (9a, 9b) comprend un agencement d'optocoupleur (10a, 10b).

3. Contrôleur de PTO selon la revendication 1 ou 2, où l'émulateur de charge (11) comprend un élément résistif (11a).

4. Contrôleur de PTO selon l'une quelconque des revendications 1 à 3, comprenant un port auxiliaire (4a) connecté au port d'entrée de commande (4) et à l'agencement d'isolateur galvanique (9a, 9b), et où l'émulateur de charge (11) peut être connecté de manière amovible au port auxiliaire (4a) externe au contrôleur de PTO (1).

5. Contrôleur de PTO selon l'une quelconque des revendications 1 à 4, où l'agencement de contrôleur (8a, 8b) comprend un agencement en parallèle d'un premier microcontrôleur (8a) et d'un deuxième microcontrôleur (8b), et où l'agencement d'isolateur galvanique (9a, 9b) comprend un agencement en parallèle d'un premier isolateur galvanique (9a) et d'un deuxième isolateur galvanique (9b),
où le premier isolateur galvanique (9a) est connecté entre le port d'entrée de commande (4) et le premier microcontrôleur (8a), et où le deuxième isolateur galvanique (9b) est connecté entre le port d'entrée de commande (4) et le deuxième microcontrôleur (8b).

6. Contrôleur de PTO selon la revendication 5, où le premier microcontrôleur (8a) et le deuxième microcontrôleur (8b) sont connectés de manière communicative.

7. Contrôleur de PTO selon la revendication 5 ou 6, où le premier isolateur galvanique (9a) comprend un premier optocoupleur (10a) et où le deuxième isolateur galvanique (9b) comprend un deuxième optocoupleur (10b).

8. Contrôleur de PTO selon la revendication 7, où chacun du premier isolateur galvanique (9a) et du deuxième isolateur galvanique (9b) comprend un filtre (17) connecté entre le port d'entrée de commande (4) et le premier optocoupleur (10a) et le deuxième optocoupleur (10b) respectivement.

9. Contrôleur de PTO selon l'une quelconque des revendications 5 à 8, comprenant en outre un commutateur côté bas (12a) connecté au port de sortie de commande (6) et au premier microcontrôleur (8a), et un commutateur côté haut (12b) connecté au port de sortie de commande (6) et au deuxième microcontrôleur (8b).

10. Contrôleur de PTO selon la revendication 9, comprenant en outre un capteur de courant (13) connecté entre le commutateur côté haut (12b) et le port de sortie de commande (6), et en outre connecté de manière communicative au premier microcontrôleur (8a).

11. Contrôleur de PTO selon la revendication 9 ou 10, où le premier microcontrôleur (8a) est configuré pour fournir un premier signal de modulation (M1) au commutateur côté bas (12a) et où le commutateur côté bas (12a) est configuré pour fournir un deuxième signal de modulation (M2) au port de sortie de commande (6).

12. Contrôleur de PTO selon la revendication 11, où le premier microcontrôleur (8a) est configuré pour recevoir des paramètres de configuration programmables pour la transmission de PTO (2), où le premier signal de modulation (M1) à fournir par le premier microcontrôleur (8a) est adapté sur la base des paramètres de configuration programmables.

13. Contrôleur de PTO selon l'une quelconque des revendications 5 à 12, où le premier microcontrôleur (8a) comprend un module sans fil (14) pour une communication sans fil externe.

14. Contrôleur de PTO selon l'une quelconque des revendications 5 à 13, où le premier microcontrôleur (8a) peut être connecté à un ou plusieurs capteurs (15) et/ou indicateurs lumineux (16).
